# EUROPÄISCHE PATENTSCHRIFT

(11) **EP 1 481 368 B1**
(45) Veröffentlichungstag und Bekanntmachung des Hinweises auf die Patenterteilung: **09.01.2008**
(21) Anmeldenummer: 03711826.2
(22) Anmeldetag: 18.02.2003
(51) Int. Cl.: G06K 19/07, G06K 7/00, G01S 13/84

(54) **DICHTUNGSBALG FÜR EIN KUGELGELENK**
SEALING BELLOWS FOR A BALL JOINT
SOUFFLET D'ETANCHEITE D'UN JOINT A ROTULE

(30) Priorität: 06.03.2002 DE 10209725
(43) Veröffentlichungstag der Anmeldung: 01.12.2004
(73) Patentinhaber: ZF Lemförder Metallwaren AG, 49448 Lemförde (DE)
(72) Erfinder: ABELS, Olaf, 49191 Belm (DE)
(86) Internationale Anmeldenummer: PCT/DE2003/000494
(87) Internationale Veröffentlichungsnummer: WO 2003/075219

(56) Entgegenhaltungen:
- FR-A- 1 421 289
- GB-A- 2 142 082
- US-A- 3 175 834

## Beschreibung

Die Erfindung betrifft einen elastischen Dichtungsbalg für ein Kugelgelenk vorzugsweise für Fahrwerksaufhängungen oder Lenkungen von Kraftfahrzeugen, bei dem das Kugelgelenk ein Gelenkgehäuse mit einem darin dreh- und schwenkbar gelagerten, mit einem zugehörigen Zapfenteil an einer fahrwerkseitigen Aufnahme festgelegten Gelenkzapfen aufweist, wobei der Dichtungsbalg am Gelenkgehäuse statisch und am Zapfenteil mittels eines Dichtungssitzes aus mindestens einer, das Zapfenteil umgreifenden, an einem Dichtungsbalgflansch angeordneten, wulstartig zum Zapfenteil vorgewölbten Dichtungslippe festgelegt ist, deren das Zapfenteil umschließender Innendurchmesser kleiner ist, als der Außendurchmesser des korrespondierenden Zapfenteilbereiches.

Elastische Dichtungsbälge für Kugelgelenke dienen allgemein dazu, den Innenbereich des Gelenkgehäuses eines derartigen Kugelgelenkes, in dem ein Gelenkzapfen üblicherweise in einer Gelenkschale aufgenommen ist, vor Umwelteinflüssen wie Wasser und Verunreinigungen zu schützen. Aus dem Stand der Technik sind für die Abdichtwirkung der Kugelgelenke unterschiedliche Dichtsysteme bekannt, diese basieren üblicherweise darauf, dass im Bereich des Dichtungsbalgflansches, in dem der Dichtungssitz zwischen Dichtungsbalg und Zapfenteil gebildet ist, eine Druckspannung aufgebaut wird, die den Dichtungsbalgflansch bei Bewegungen des Zapfenteiles an diesem anliegend hält. Dies geschieht bei einfachen Systemen dadurch, dass durch das Aufweiten des Dichtungsbalgflansches mit der vorgewölbten Dichtungslippe auf Grund der elastischen Materialeigenschaften des Dichtungsbalges eine Druckspannung aufgebaut wird. Die Druckspannung kann gegebenenfalls dadurch unterstützt werden, dass an der Außenseite des Dichtungsbalgflansches zusätzlich aufgesetzte Federelemente beispielsweise in Form von Spannringen eine zentripetale Vorspannung erzeugen.

Eine andere Möglichkeit, die Andruckkräfte des Gummibalgflansches am Zapfenteil zu erhöhen besteht darin, im Bereich des Dichtungsbalgflansches zusätzliche Formelemente einzuvulkanisieren, wobei beim Aufweiten des Innendurchmessers des Dichtungsbalgflansches das sich zwischen den Formelementen und dem Dichtungssitz an der Oberfläche des Zapfenteiles befindliche Volumen des elastischen Materials des Dichtungsbalges verquetscht und am Dichtungssitz eine erhöhte Flächenpressung erzeugt wird.

Die geschilderten aus dem Stand der Technik bekannten Möglichkeiten, am Dichtungssitz eine Druckspannung zu erzeugen, weisen insgesamt Nachteile bezüglich der Dosierbarkeit der Flächenpressung sowie der Toleranzanfälligkeit des Dichtsystems auf. So addieren sich beispielsweise bei den oben geschilderten Spannringkonstruktionen Toleranzen aus Fertigungs- und Montageprozessen.

Dichtungslösungen, bei denen einvulkanisierte Formelemente Verwendung finden, sind naturgemäß in ihrem Herstellprozess aufwendiger als die übrigen geschilderten Dichtungsvarianten und darüber hinaus insbesondere auf Grund des meist sehr geringen Gummivolumens, welches zwischen den Formelementen und der Oberfläche des Zapfenteiles auf Druck beansprucht wird, ebenfalls in ihrer Funktion äußerst abhängig von Fertigungstoleranzen.

Die oben geschilderte Variante, Dichtungsbälge ohne zusätzliche Spannelemente zu verwenden, haben sich in ihrer Praxis nur bis zu einem bestimmten Winkelausschlägen des Kugelgelenkes bewährt, da ein stärkerer Winkelausschlag des Zapfenteiles naturgemäß auch eine stärkere Bewegung der übrigen Mantelfläche des Dichtungsbalges mit sich bringt, was wiederum auf Grund der Materialeigenschaften Kräfte bewirkt, die unter Umständen eine Verkantung des Dichtungsbalgflansches und somit eine erhebliche Herabsetzung der Dichtwirkung durch Verkleinerung der Dichtungssitzfläche hervorrufen.

Ausgehend vom Stand der Technik gemäß Oberbegriff des Anspruchs 1, siehe z.B. US-A-3 175 834, ist die Aufgabe der vorliegenden Erfindung, einen elastischen Dichtungsbalg bereitzustellen, welcher die aus dem Stand der Technik bekannten Nachteile beseitigt und eine unter allen Rahmenbedingungen sichere Anlage des Dichtungsbalgflansches am korrespondierenden Zapfenteil trotz großer Winkelausschläge von letzterem gewährleistet. Darüber hinaus soll der erfindungsgemäße elastische Dichtungsbalg kostengünstig herstellbar sein, wobei insbesondere eine niedrige Toleranzempfindlichkeit im Rahmen des Herstellprozesses für den Dichtungsbalg selbst von Bedeutung ist.

Diese Aufgabe wird erfindungsgemäß durch die kennzeichnenden Merkmale des Anspruchs 1 gelöst.

Durch diese erfindungsgemäße Gestaltung werden im Gegensatz zu den oben geschilderten aus dem Stand der Technik bekannten Lösungen innerhalb des Dichtungsbalgflansches Schubkräfte erzeugt, die im Gegensatz zu den üblicherweise aufgebrachten Druckkräften im Hinblick auf ihre Robustheit und Toleranzunanfälligkeit wesentlich höheren Anforderungen genügen. Die Schubkräfte basieren darauf, dass die nach innen vorgewölbte Dichtungslippe bei der Montage des Balges auf dem Zapfenteil aufgeweitet wird. Gleichzeitig entsteht durch den unmittelbar dem Dichtungssitz benachbart angeordneten das Zapfenteil vollständig umgreifenden Versteifungsring eine Schubfederwirkung, welche die notwendigen Anpresskräfte im Bereich des Dichtungssitzes bereitstellt.

Die Besonderheit der Anpresskrafterzeugung besteht darin, dass zwischen dem Versteifungsring und dem Zapfenteil kein Gummivolumen verquetscht wird, sondern die notwendige Anpresskraft nur über die um Gummivolumen neben dem Versteifungsring herrschende Schubbelastung aufgebracht wird.

Besondere Ausgestaltungen des Gegenstandes der Erfindung ergeben sich in Zusammenschau mit der im Anspruch 1 geschilderten technischen Lehre zusätzlich aus den Merkmalen der Unteransprüche.

Die Größe der auftretenden Schubkräfte lässt sich insbesondere dadurch steigern, dass der Versteifungsring einen rechteckförmigen Querschnitt aufweist, wobei die kürzere der Querschnittsseiten zum Zapfenteil weisend angeordnet ist.

Ist darüber hinaus die Längenausdehnung der längeren Seite des Rechteckquerschnittes des Versteifungsringes im Wesentlichen genauso groß wie die Gesamtbreite des Dichtungsbalgflansches an seinem Umfangsquerschnitt, so entsteht eine optimale Schubkraftausbeute im Bereich des Dichtungssitzes.

Darüber hinaus hat es sich als vorteilhaft für den Herstellvorgang erwiesen, wenn der Dichtungsbalg aus Kautschukmaterial besteht, in welches der Versteifungsring im Bereich des Dichtungsbalgflansches einvulkanisiert ist. Das Einvulkanisieren eines metallischen Versteifungsringes ist produktionstechnisch einfach durchzuführen, wobei ein robuster Verbund aus Dichtungsbalgflansch und Versteifungsring entsteht und die Gestaltung des Dichtungsbalgflansches als Spritzgussteil keine besonderen Gestaltungseinschränkungen mit sich bringt.

Eine weitere vorteilhafte Ausgestaltung sieht vor, den freien Abstand zwischen Versteifungsring und Zapfenteil in einem Bereich von 0,5 mm bis 2,0 mm zu wählen. Durch diese Maßnahme ergibt sich insbesondere bei großen Auslenkungen des Gelenkzapfens, der wiederum durch die Verformung des Dichtungsbalges entsprechende Kräfte in der Mantelfläche impliziert, dass diese Kräfte größtenteils durch die abstützende Wirkung des Versteifungsringes gegen den dem Versteifungsring gegenüberliegenden Bereich des Zapfenteiles abgefangen werden können.

Die Schubspannungen lassen sich neben der Tatsache der rechteckförmigen Querschnittsgestaltung des Verstärkungsringes dadurch steigern, dass nach der Erfindung der Differenzbetrag der Durchmessermaße der in Richtung des Zapfenteiles vorstehenden Dichtungslippe zu dem Zapfenteilbereich, an dem die Dichtungslippe nach der Montage anliegt, wesentlich größer ist als der Differenzbetrag zwischen dem Innenmaß des Versteifungsringes und dem Außendurchmesser des dem Versteifungsring gegenüberliegenden Zapfenteilbereiches.

Die Kombination der geschilderten Maßnahmen ergibt eine zuverlässige Abstützung bei größeren Auslenkungen des Gelenkzapfens und impliziert gleichzeitig durch die hohen Verformkräfte im Bereich der Dichtungslippe, die innerhalb des benachbarten Dichtungsbalgflansches die oben geschilderten Schubkräfte erzeugen, eine zuverlässige Dichtwirkung, die ihre gute Funktionsweise auch über eine lange Lebensdauer des Gelenkes bereitstellen kann. Darüber hinaus besitzt die geschilderte erfindungsgemäße Gestaltung den Vorteil, dass die Verteilung der Vorspannung beispielsweise anders als bei Spannringen über den ganzen Umfang hinweg gleichmäßig erfolgt, da der Versteifungsring als Vollringelement im Gegensatz zu Spannringen keinen andruckfreien Zwischenraum aufweist. Das Verschleiß- und Setzverhalten des Dichtungsbalges kann darüber hinaus durch eine Reduzierung der Vorspannung des Dichtungssitzes auf das minimal notwendige Maß herabgesetzt werden, da die auftretenden Kräfte von wesentlich weniger Parametern bestimmt werden als bei herkömmlichen Dichtungsbalgsystemen. Hierbei ist zu beachten, dass die Auslegung der Vorspannung im Bereich des Dichtungsbalgflansches immer bestimmt wird durch die kleinste verbleibende Flächenpressung über den Umfang bei einer Verschwenkung des Gelenkzapfens. Letztendlich hat sich gezeigt, dass die Bestimmung der Rahmenparameter für eine korrekte Funktionsweise so zuverlässig berechenbar wird, dass mit wesentlich weniger Testaufwand bei der konstruktiven Gestaltung des erfindungsgemäßen elastischen Dichtungsbalges für unterschiedliche Anwendungsfälle gerechnet werden kann.

Im Folgenden wird ein Ausfübrungsbeispiel des Gegenstandes der Erfindung anhand der beigefügten Zeichnungen näher erläutert:

Es zeigt hierbei:
- Figur 1: ausschnittsweise einen elastischen Dichtungsbalg der erfindungsgemäßen Art in vergrößerter Schnittdarstellung im Bereich des Dichtungsbalgflansches vor dem Einbau in ein Kugelgelenk und
- Figur 2: den Dichtungsbalg aus Figur 1 nach dem durch das Aufziehen auf den Gelenkzapfen erfolgten Zusammenbau des Kugelgelenkes.

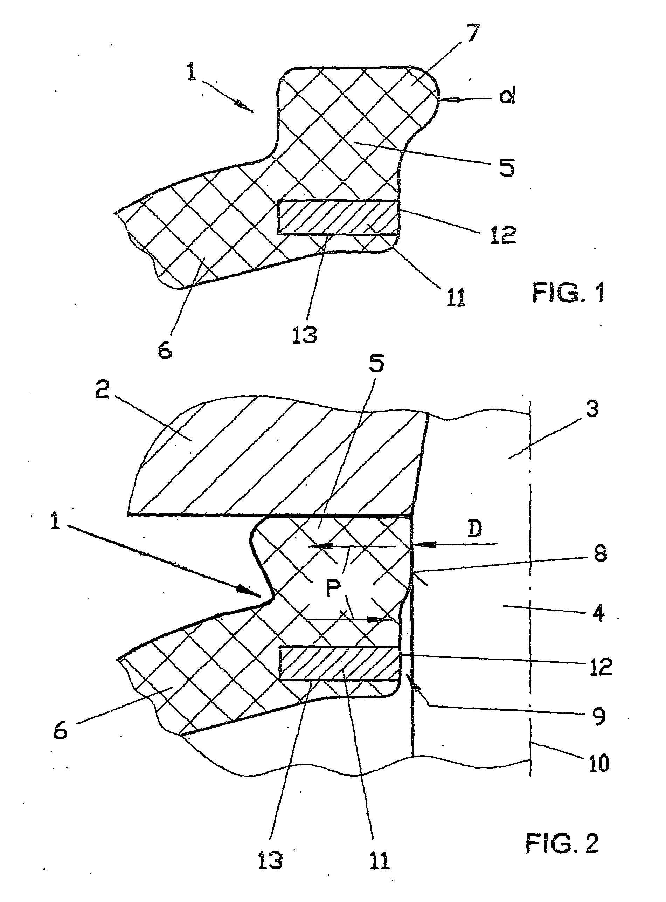

Der in seiner Gesamtheit mit 1 bezeichnete Dichtungsbalg ist in der Figur 1 nur abschnittweise dargestellt. Wesentlich für die erfindungsgemäße Gestaltung ist der für die Ausbildung eines Dichtungssitzes maßgebliche Dichtungsbalgflansch 5, welcher sich an eine Mantelfläche 6 des Dichtungsbalges 1 anschließt. Die sich am entgegengesetzten Ende der Mantelfläche 6 befindliche feste Anbindung des Dichtungsbalges 1 am Gelenkgehäuse ist in aus dem Stand der Technik bekannter Weise gestaltet und für den Erfindungsgedanken nicht von Belang.

Im Bereich des Dichtungsbalgflansches 5 besitzt dieser eine an seinem freien oberen Ende angeordnete Dichtungslippe 7, welche eine im Querschnitt im Wesentlichen halbkreisförmige Gestalt aufweist. An den Bereich der Dichtungslippe 7 schließt sich unmittelbar benachbart ein in den Dichtungsbalgflansch 5 integrierter Versteifungsring 11 an. Der Versteifungsring ist im Gegensatz zu dem elastischen Material des Dichtungsbalges 1 aus nicht elastischem oder geringer elastischem Material, vorzugsweise aus Metall gefertigt. Der Versteifungsring 11 ist in den Dichtungsbalgflansch 5 einvulkanisiert und weist eine im Querschnitt rechteckförmige Gestaltung auf.

Wie aus der Figur 1 ersichtlich ist, ist die kürzere der Querschnittsseiten 12 zu der mit der sich vorwölbenden Dichtungslippe 7 versehenen Innenseite des Dichtungsbalges 1 weisend angeordnet. Die zweite, längere Querschnittsseite 13 des Rechteckquerschnittes entspricht im Wesentlichen der Gesamtbreite des Dichtungsbalgflansches 5 an seinem Umfangsquerschnitt.

Die spezielle Gestaltung des Dichtungsbalgflansches mit der vorgewölbten Dichtungslippe 7 und dem daneben angeordneten Versteifungsring 11 bildet ein so genanntes Schubfedersystem, welches nach dem Zusammenbau des Dichtungsbalges mit dem Zapfenteil 4 eines Gelenkzapfens 3 durch die Verformung der Dichtlippe 7 in dem zugehörigen Dichtungsbalgflanschbereich Schubkräfte erzeugt. Die sich aus dem Zusammenbauzustand ergebende Verformung der Dichtungslippe kann anschaulich der Figur 2 entnommen werden. Die innerhalb des Dichtungsbalgflansches wirkenden Schubkräfte sind in der Figur 2 zur Veranschaulichung durch Pfeile P kenntlich gemacht. Die Darstellung der Figur 2 zeigt den Dichtungsbalg 1 aufgezogen auf den Zapfenteil 4 eines Gelenkzapfens 3, welcher in hier nicht näher dargestellter Weise in einem Gelenkgehäuse 2 eines Kugelgelenkes aufgenommen ist. Deutlich ist in der Darstellung zu erkennen, dass die in der Figur 1 ausgeprägt vorgewölbte Dichtungslippe 7 durch den Zapfenteil 4 zusammengepresst worden ist.

Durch diese Rahmenbedingung entstehen innerhalb des Dichtungsbalgflansches 5 die durch die Pfeile dargestellten Schubkräfte P, da einer Verformung des Dichtungsbalgflansches 5 in seiner Gesamtheit durch den einvulkanisierten Versteifungsring 11 Einhalt geboten wird. Der Innendurchmesser des Versteifungsringes 11 ist so gewählt, dass zwischen der Querschnittseite 12 des Versteifungsringes 11 und der Oberfläche des Zapfenteiles 4 ein geringfügiger Abstand 9 nach dem Zusammenbau bestehen bleibt. Der Abstand 9 verjüngt sich zum freien Ende des Dichtungsbalgflansches 5 und geht in den eigentlichen für die Funktion des Dichtungsbalges 1 wesentlichen Dichtungssitz 8 über.

Die Ausbildung eines so genannten Schubfedersystem bestehend aus Dichtungslippe 7 und Versteifungsring 11 ergibt sich im Wesentlichen aus der Tatsache, dass der Versteifungsring 11 mit seinem rechteckförmigen Querschnitt in Axiallängsrichtung der Gelenkzapfenachse 10 gesehen unmittelbar benachbart angeordnet sind. Die Form der Dichtungslippe 7 und hier insbesondere die Höhe der Vorwölbung, d.h. der Innendurchmesser d der Dichtungslippe im Verhältnis zu dem Außendurchmesser D, d.h. deren Differenz, stellen neben den Rechteckabmaßen des Versteifungsringes 11 die wesentlichen Berechnungsgrößen für die zur Verfügung stehenden Anpresskräfte im Bereich des Dichtungssitzes 8 dar. Der Abstand 9 zwischen Versteifungsring 11 und Außendurchmesser D des Zapfenteiles 4 ist vorteilhafterweise wesentlich geringer als die Differenz der Durchmesser D und d. Auf diese Weise können bei einer Auslenkung des Gelenkzapfens 3 innerhalb der Mantelfläche 6 hervorgerufene Kräfte durch eine Anlage der Querschnittseite 12 des Versteifungsringes 11 an dem zugehörigen Zapfenbereich des Zapfenteiles 4 abgefangen werden.

Es entsteht somit ein von wenigen Rahmenparametem abhängiges Schubfedersystem, welches durch eine sehr viel einfachere Berechnung als herkömmliche Dichtsysteme für Kugelgelenke eine optimale Dichtwirkung über eine große Lebensdauer des mit dem erfindungsgemäßen elastischen Dichtungsbalg versehenen Kugelgelenkes ermöglicht. Gleichzeitig ist der Dichtungsbalg einfach und kostengünstig herstellbar, wobei die Einvulkanisierung des Versteifungsringes 11 eine ansonsten unabhängige Gestaltung des Dichtungsbalgflansches 5 mit seiner daran angeordneten Dichtungslippe 7 zulässt.

### Bezugszeichenliste

- 1: Dichtungsbalg
- 2: Gelenkgehäuse
- 3: Gelenkzapfen
- 4: Zapfenteil
- 5: Dichtungsbalgflansch
- 6: Mantelfläche
- 7: Dichtungslippe
- 8: Dichtungssitz
- 9: Abstand
- 10: Gelenkzapfenachse
- 11: Versteifungsring
- 12: Querschnittseite
- 13: Querschnittseite
- d: Innendurchmesser Dichtlippe
- D: Außendurchmesser Zapfenteil

## Patentansprüche

1. Elastischer Dichtungsbalg für ein Kugelgelenk vorzugsweise für Fahrwerksaufhängungen oder Lenkungen von Kraftfahrzeugen, bei dem das Kugelgelenk ein Gelenkgehäuse (2) mit einem darin dreh- und schwenkbar gelagerten, mit einem zugehörigen Zapfenteil (4) an einer fahrzeugseitigen Aufnahme festgelegten Gelenkzapfen (3) aufweist, wobei der Dichtungsbalg (1) am Gelenkgehäuse statisch und am Zapfenteil (4) mittels eines Dichtungssitzes (8) aus mindestens einer, das Zapfenteil (4) umgreifenden, an einem Dichtungsbalgflansch angeordneten, wulstartig zum Zapfenteil (4) vorgewölbten Dichtungslippe (7) festgelegt ist, deren das Zapfenteil (4) umschließender Innendurchmesser (d) kleiner ist als der Außendurchmesser (D) des korrespondierenden Zapfenteilbereichs, wobei der Dichtungsbalgflansch in Axiallängsrichtung der Gelenkzapfenachse unmittelbar der Dichtungslippe (7) benachbart einen in zusammengebautem Zustand des Kugelgelenkes mit geringem freien Abstand zum Zapfenteil (4) angeordneten, dieses umgreifenden Versteifungsring (11) aus nicht elastischem Material aufweist, **dadurch gekennzeichnet, dass** der Differenzbetrag der Durchmessermaße von Dichtungslippe (7) und Zapfenteil (4) wesentlich größer ist als der Differenzbetrag zwischen Innenmaß (d) des Versteifungsringes und Außendurchmesser (D) des dem Versteifungsring (11) gegenüberliegenden Zapfenteilbereiches.

2. Elastischer Dichtungsbalg nach Anspruch 1, **dadurch gekennzeichnet, dass** der Versteifungsring (11) einen rechteckförmigen Querschnitt aufweist, wobei die kürzere der Querschnittsseiten zum Zapfenteil (4) weisend angeordnet ist.

3. Elastischer Dichtungsbalg nach Anspruch 2, **dadurch gekennzeichnet, dass** die Längenausdehnung der längeren Seite des Rechteckquerschnittes des Versteifungsringes (11) im Wesentlichen der Gesamtbreite des Dichtungsbalgflansches an seinem Umfangsquerschnitt entspricht.

4. Elastischer Dichtungsbalg nach einem der Ansprüche 1 bis 3, **dadurch gekennzeichnet, dass** der Dichtungsbalg (1) aus Kautschukmaterial besteht, in welches der Versteifungsring (11) im Bereich des Dichtungsbalgflansches einvulkanisiert ist.

5. Elastischer Dichtungsbalg nach einem der Ansprüche 1 bis 4, **dadurch gekennzeichnet, dass** der freie Abstand zwischen Versteifungsring (11) und Zapfenteil (4) im Bereich von 0,5 mm bis 2,0 mm liegt.

6. Elastischer Dichtungsbalg nach einem der Ansprüche 1 bis 5, **dadurch gekennzeichnet, dass** die Dichtungslippe (7) einen im Wesentlichen halbkreisförmig in Richtung des Zapfenteiles (4) vorgewölbten Querschnitt aufweist.

## Claims

1. Elastic bellows-type seal for a ball joint preferably for chassis suspension systems or steering systems of motor vehicles, in which the ball joint comprises a joint housing (2), in which there is rotatably and pivotably mounted a pivot pin (3) that is fastened by an associated pin part (4) to a vehicle-side receiver, wherein the bellows-type seal (1) is fastened to the joint housing statically and to the pin part (4) by means of a seal seat (8) comprising at least one sealing lip (7), which surrounds the pin part (4) and is disposed on a bellows-type seal flange and projects in a bead-like manner towards the pin part (4) and of which the inside diameter (d) surrounding the pin part (4) is smaller than the outside diameter (D) of the corresponding pin part region, wherein in axial longitudinal direction of the pivot pin axis the bellows-type seal flange has immediately adjacent to the sealing lip (7) a reinforcing ring (11) of non-elastic material, which in the assembled state of the ball joint is disposed with slight clearance relative to the pin part (4) and surrounds the pin part (4), **characterized in that** the difference of the diameter dimensions of sealing lip (7) and pin part (4) is much greater than the difference between internal dimension (d) of the reinforcing ring (11) and outside diameter (D) of the pivot pin region lying opposite the reinforcing ring (11).

2. Elastic bellows-type seal according to claim 1, **characterized in that** the reinforcing ring (11) has a rectangular cross section, wherein the shorter of the cross-sectional sides is disposed facing the pin part (4) .

3. Elastic bellows-type seal according to claim 2, **characterized in that** the linear extent of the longer side of the rectangular cross section of the reinforcing ring (11) corresponds substantially to the total width of the bellows-type seal flange at the peripheral cross section thereof.

4. Elastic bellows-type seal according to one of claims 1 to 3, **characterized in that** the bellows-type seal (1) is made of unvulcanized rubber, in which the reinforcing ring (11) is encapsulated in the region of the bellows-type seal flange by vulcanization.

5. Elastic bellows-type seal according to one of claims 1 to 4, **characterized in that** the clearance between reinforcing ring (11) and pin part (4) is in the region of 0.5 mm to 2.0 mm.

6. Elastic bellows-type seal according to one of claims 1 to 5, **characterized in that** the sealing lip (7) has a cross section that projects in a substantially semicircular shape in the direction of the pin part (4) .

## Revendications

1. Soufflet d'étanchéité élastique pour une articulation à rotule, de préférence pour des dispositifs de suspension de châssis ou de direction de véhicules automobiles, où l'articulation à rotule comprend un boîtier d'articulation (2) équipé d'un pivot d'articulation (3) monté de façon pivotante et oscillante dans celui-ci, dont un élément de pivot correspondant (4) est immobilisé dans un récepteur côté véhicule, le soufflet d'étanchéité (1) étant immobilisé de façon statique sur le boîtier d'articulation, et sur l'élément de pivot (4) par l'intermédiaire d'une assise étanche (8) constituée d'au moins une lèvre d'étanchéité (7) entourant l'élément de pivot (4), aménagée sur un col du soufflet d'étanchéité, saillant sous forme d'un bourrelet en direction de l'élément de pivot (4), dont le diamètre intérieur (d) entourant l'élément de pivot (4) est plus petit que le diamètre extérieur (D) de la zone correspondante de l'élément de pivot, le col du soufflet d'étanchéité comprenant un anneau raidisseur (11) fait d'une matière non élastique, disposé à proximité immédiate de la lèvre d'étanchéité (7), dans le sens axial longitudinal de l'axe du pivot d'articulation, placé, à l'état assemblé de l'articulation à rotule, à une faible distance libre par rapport à l'élément de pivot (4) et entourant celui-ci,
**caractérisé en ce que** la valeur de la différence entre les cotes de diamètre de la lèvre d'étanchéité (7) et de l'élément de pivot (4) est sensiblement plus grande que la valeur de la différence entre la cote intérieure (d) de l'anneau raidisseur et le diamètre extérieur (D) de l'élément de pivot opposé à l'anneau raidisseur (11).

2. Soufflet d'étanchéité élastique selon la revendication 1, **caractérisé en ce que** l'anneau raidisseur (11) présente une forme de section transversale rectangulaire, le petit côté de la forme de section transversale étant disposé orienté en direction de l'élément de pivot (4).

3. Soufflet d'étanchéité élastique selon la revendication 2, **caractérisé en ce que** l'étendue longitudinale du grand côté de la section transversale rectangulaire de l'anneau raidisseur (11) correspond pour l'essentiel à la largeur totale du col du soufflet d'étanchéité, au niveau de sa section transversale périphérique.

4. Soufflet d'étanchéité élastique selon l'une des revendications 1 à 3, **caractérisé en ce que** le soufflet d'étanchéité (1) est constitué d'une matière à base de caoutchouc, dans laquelle est intégré par vulcanisation l'anneau raidisseur (11), au niveau du col du soufflet d'étanchéité.

5. Soufflet d'étanchéité élastique selon l'une des revendications 1 à 4, **caractérisé en ce que** l'espacement entre l'anneau raidisseur (11) et l'élément de pivot (4) est de l'ordre de 0,5 mm à 2,0 mm.

6. Soufflet d'étanchéité élastique selon l'une des revendications 1 à 5, **caractérisé en ce que** la lèvre d'étanchéité (7) présente une section transversale bombée essentiellement semi-circulaire, faisant saillie en direction de l'élément de pivot (4).
